# EUROPÄISCHE PATENTANMELDUNG

(11) **EP 4 653 326 A1**
(43) Veröffentlichungstag der Anmeldung: **26.11.2025**
(21) Anmeldenummer: 25178031.8
(22) Anmeldetag: 21.05.2025
(51) Int. Cl.: B64U 10/13, B64U 50/34, B64U 10/60, B64U 101/29, B64U 101/45, B64U 101/30

(54) **DROHNENVERBUND UND SYSTEM MIT EINEM DROHNENVERBUND**

(30) Priorität: 23.05.2024 DE 102024114417
(71) Anmelder: IDAS GmbH Intelligent Drone Applicator Systems, 77855 Achern (DE)
(72) Erfinder: Knopf, Martin, 77855 Achern (DE); Doll, Fredy, 77855 Achern (DE); Doll, Pascal, 77855 Achern (DE)
(74) Vertreter: LBP Lemcke, Brommer & Partner Patentanwälte mbB

(57) **Zusammenfassung**

Die Anmeldung betrifft einen Drohnenverbund (1) aus zumindest drei Drohnen, mit zumindest einer ersten Arbeitsdrohne (2), wobei die Arbeitsdrohne (2) zur Ausübung von Tätigkeiten in Ihrer Umgebung ausgebildet ist und über eine Versorgungsleitung (4) mit einer Basisstation (5) verbunden ist, und mit zumindest einer Hilfsdrohne (3), wobei die Versorgungsleitung (4) über die Hilfsdrohne (3) zu der Arbeitsdrohne (2) geführt ist. Zudem umfasst der Drohnenverbund eine weitere, dritte Drohne (14), welche Sensoren (8) und/oder Mittel (9) zur Überwachung der Arbeitsdrohne (2) und/oder Hilfsdrohne (3) und/oder Mittel (9) zur Überwachung der Umgebung der Arbeitsdrohne (2) und/oder Hilfsdrohne (3) umfasst. Weiter betrifft die Erfindung ein System (13) umfassend einen Drohnenverbund (1) und eine Basisstation (5).

## Beschreibung

Die Erfindung betrifft einen Drohnenverbund nach dem Oberbegriff des Anspruchs 1 sowie ein System nach Anspruch 13.

Unbemannte Flugdrohnen stellen üblicherweise ferngesteuerte oder autonom betriebene Fluggeräte dar und kommen für verschiedene Anwendungszwecke zum Einsatz. Eine gängige Ausführungsform stellen sogenannte Multicopter dar. Ein Multicopter ist ein Fluggerät, das durch mehrere Rotoreinheiten angetrieben ist, deren Rotoren in einer gemeinsamen Rotorebene angeordnet sind. Die Steuerung derartiger Flugdrohnen erfolgt durch Einstellung der Geschwindigkeiten und Drehrichtungen der Rotoren. Dadurch ist es möglich, beliebige Drehungen um die Gier-, Nick- oder Wankachse der Flugdrohne einzustellen oder etwa einen Schwebe-, Steig- oder Sinkflug einzuleiten.

Aufgrund ihrer guten Manövrierbarkeit kommen derartige Flugdrohnen für eine Vielzahl verschiedener Anwendungen in Betracht, wobei die Flugdrohne insbesondere mit unterschiedlichen Effektoren, also Werkzeugen, Applikationsvorrichtungen oder etwa Sensoren, ausgestattet werden kann, die mit der Umgebung der Flugdrohne in Interaktion treten. Die Anwendungen sind jedoch meist dadurch limitiert, dass die Flugdrohne nur eine gewisse Last aufnehmen kann und eine durch einen Akku begrenzte Flugdauer aufweist. Durch Aufstieg und Abstieg verbleibt meist nur eine kurze Zeit, um entsprechende Arbeiten oder Aufnahmen durchzuführen. Gerade bei Applikationsvorrichtungen, bei welchen ein Applikationsmedium ausgebracht wird, können auf Grund der Last sowie der Lastverteilung nur kleine Mengen mit der Drohne transportiert werden, wodurch der Applikationsvorgang bei größeren Projekten mehrfach unterbrochen werden muss. Es ist daher bekannt, dass entsprechende Drohnen mit Versorgungsleitungen ausgestattet sind, welche die Einsatzdauer der Flugdrohnen für einen Einsatz verlängern soll. Nachteilig an solchen Systemen ist es allerdings, dass die Versorgungleitung zu einer zusätzlichen Last an der Drohne führt, welche je nach Angriffspunkt an der Drohne zusätzlich eine Unwucht erzeugt und zu einer Schwerpunktverschiebung führt. Die Steuerung der Drohne wird dadurch deutlich erschwert.

Es ist daher eine Aufgabe einen Drohnenverbund und ein System mit einem Drohnenverbund anzugeben, welche den Einsatzzweck einer Arbeitsdrohne verbessert. Es ist eine weitere Aufgabe die Versorgung der Arbeitsdrohne und gleichzeitig eine gute Manövrierfähigkeit der Arbeitsdrohe sicherzustellen.

Diese und weitere Aufgaben werden gelöst durch einen Drohnenverbund nach dem Anspruch 1 sowie ein System nach Anspruch 13. Vorteilhafte Ausgestaltungsformen des Drohnenverbundes sind in den Ansprüchen 2 bis 12 dargelegt. Vorteilhafte Ausgestaltungsformen des Systems sind in den Ansprüchen 14 bis 17 dargelegt.

Der erfindungsgemäße Drohnenverbund umfasst zumindest zwei Drohnen, umfassend zumindest eine erste Arbeitsdrohne, wobei die Arbeitsdrohne zur Ausübung von Tätigkeiten in ihrer Umgebung ausgebildet ist und über eine Versorgungsleitung mit einer Basisstation verbunden ist, und zumindest eine Hilfsdrohne, wobei die Versorgungsleitung über die Hilfsdrohne zu der Arbeitsdrohne geführt ist. Weiter umfasst der erfindungsgemäße Drohnenverbund eine weitere, dritte Drohne, welche Sensoren und/oder Mittel zur Überwachung der Arbeitsdrohne und/oder Hilfsdrohne und/oder Mittel zur Überwachung der Umgebung der Arbeitsdrohne und/oder Hilfsdrohne umfasst.

Durch die Führung der Versorgungsleitung über die Hilfsdrohne wird eine Zugbelastung an der Arbeitsdrohne im Wesentlichen reduziert, wodurch diese besser und einfacher gesteuert werden kann. Zudem wird die Flexibilität der Arbeitsdrohne erhöht, da diese freier bewegbar ist, ohne dass die Bewegung unmittelbar durch eine Versorgungsleitung eingeschränkt ist. Der Bewegungsspielraum der Arbeitsdrohne wird somit erhöht. Insgesamt wird der Einsatz der Arbeitsdrohne erleichtert bei gleichzeitiger Sicherung der Versorgung der Arbeitsdrohne über die Versorgungsleitung.

Durch eine weitere Drohne wird die Flexibilität erhöht, da jeder Drohne eine spezifische Aufgabe zugeordnet ist. Insbesondere bei der Überwachung und für Sensormessungen kann es erforderlich sein, dass diese Drohne einen größeren Bewegungsradius benötigt, welcher bei der Hilfsdrohne und der Arbeitsdrohne durch die Anbindung an die Versorgungsleitung nicht immer gewährleistet sein kann. Auch bei der Erfassung und Dokumentation während der Durchführung eines Arbeitseinsatzes kann eine weitere, dritte Drohne, welche nicht an die Versorgungsleitung angeschlossen ist bzw. mit dieser wirkverbunden ist, freier agieren. Vorzugsweise ist die weitere Drohne unabhängig von der Arbeitsdrohne und der Hilfsdrohne, insbesondere frei von einer Versorgungsleitung, welche mit der Arbeitsdrohne und/oder der Hilfsdrohne verbunden ist. Alternativ kann die weitere Drohne jedoch auch an einer Versorgungsleitung, insbesondere zur Versorgung mit Strom angeschlossen sein. Diese Versorgungsleitung kann über die Hilfsdrohne, insbesondere über die mit der Arbeitsdrohen verbundene Hilfsdrohne geführt sein oder direkt an der weiteren Drohne angeschlossen sein. Vorzugsweise kann die Versorgungsleitung für die weitere Drohne auch über eine nur der weiteren Drohne zugeordneten Hilfsdrohne geführt sein.

Bei den Mittel zur Überwachung kann es sich insbesondere um eine Überwachungseinheit handeln. Bei den Mittel zur Überwachung, insbesondere bei der Überwachungseinheit, kann es sich beispielsweise um eine Kamera handeln. Bei dem zumindest einen Sensor kann es sich beispielsweise um einen optischen, akustischen, magnetischen oder elektrischen Sensor handeln. Der zumindest eine Sensor kann auch zur Überwachung ausgebildet oder eingesetzt werden und kann insbesondere auch als ein Mittel zur Überwachung angesehen werden.

Bei der weiteren Drohne handelt es sich insbesondere um eine Überwachungsdrohne.

In einer vorteilhaften Ausführungsform ist die Arbeitsdrohne im Wesentlichen frei von einer Zugbelastung durch die Versorgungsleitung bzw. durch eine Gewichtskraft der Versorgungsleitung. Das Gewicht der Versorgungsleitung, welche mehrere 10m lang sein kann, liegt durch den erfindungsgemäßen Drohnenverbund an der Hilfsdrohne und gerade nicht mehr an der Arbeitsdrohne an. Hierdurch wird die Manövrierfähigkeit der Arbeitsdrohne weiter verbessert und auch der Bewegungsspielraum erhöht.

Gemäß einer bevorzugten Ausführungsform ist die Versorgungseinleitung eine Stromleitung und/oder eine Datenleitung. Über die Stromleitung kann die Arbeitsdrohne und auch die Hilfsdrohne dauerhaft mit Energie versorgt werden, so dass längere Einsatzzeiten der Arbeitsdrohne und der Hilfsdrohne möglich sind. Über die Datenleitung können Informationen an die Arbeitsdrohne und die Hilfsdrohne direkt übermittelt werden, so dass eine sichere und dauerhafte Kommunikation mit den zumindest zwei Drohnen möglich ist.

Alternativ oder vorzugsweise ergänzend ist die Versorgungseinleitung eine Transportleitung für ein Medium. Vorzugsweise handelt es sich bei dem Medium um ein festes, flüssiges, pastöses und/oder gasförmiges Medium. Bevorzugt ist das Medium Wasser, ein Reinigungsmittel, ein Reinigungsmedium oder Druckluft. Über die Versorgungsleitung kann auch die Versorgung der Arbeitsdrohne mit einem Medium, welches von der Arbeitsdrohen benötigt wird, sichergestellt werden. Hierdurch kann die Arbeitsdrohne länger in der Luft verbleiben und muss nicht für ein Nachfüllvorgang für das Medium an eine Basis bzw. die Basisstation zurückgeholt werden.

In einer weiteren vorteilhaften Ausführungsform umfasst die Arbeitsdrohne zumindest einen Applikator zur Applikation eines Applikationsmediums auf ein Objekt. Bei dem Objekt kann es sich insbesondere um ein bauliches Objekt, insbesondere ein Gebäude handeln. Die Applikation sowie das Applikationsmedium hängen dabei vom jeweiligen Einsatzzweck ab. So kann es sich bei dem Applikationsmedium beispielsweise um ein Reinigungsmedium, ein Beschichtungsmittel, insbesondere eine Farbe oder einen Lack, oder ein Füllmedium, insbesondere einen Schaum, handeln. Entsprechend dem Applikationsmedium ist der passende Applikator dafür auszuwählen. Eine Applikation des Applikationsmediums erfolgt beispielsweise auf eine Fassade eines Gebäudes bzw. auf die Gebäudehülle und/oder auf Fensterflächen. Bei dem Objekt kann es sich aber auch um andere bauliche Werke als ein Gebäude handeln, beispielsweise Denkmäler, Brücken, Flugobjekte, Schiffe oder ähnliches.

Alternativ oder vorzugsweise ergänzend umfasst die Arbeitsdrohne zumindest einen Sensor zur Detektion zumindest einer Eigenschaft des Objekts und/oder der Umgebung der Arbeitsdrohne. Der Sensor kann hierbei insbesondere zur Detektion der Form und der Art der Oberfläche des Objektes ausgebildet sein. Alternativ oder vorzugsweise ergänzend kann ein Sensor zur Detektion zumindest einer Eigenschaft des Objekts und/oder der Umgebung der Arbeitsdrohne an der Hilfsdrohne und/oder der weiteren Drohne angeordnet sein. Alternativ oder ergänzend kann mittels des Sensors die Umgebung der Arbeitsdrohne überwacht werden, so dass beispielsweise eine Kollision mit Bäumen oder mit weiteren Drohnen vermieden werden kann. Zudem können auch die Umgebungsbedingungen, insbesondere Temperatur, Windgeschwindigkeit, Windrichtung und/oder Luftfeuchte ermittelt werden.

In einer bevorzugten Ausführungsform ist die Versorgungsleitung eine Transportleitung für das Applikationsmedium oder ein Hilfsmedium, wobei die Transportleitung mit dem Applikator verbunden ist. Durch die Transportleitung wird der Applikator dauerhaft mit dem Applikationsmedium bzw. das Hilfsmedium versorgt, so dass beispielsweise auf das Anbringen von Tanks für das Applikationsmedium bzw. das Hilfsmedium verzichtet werden kann. Hierdurch können die Arbeitseinsätze der Arbeitsdrohne zeitlich verlängert und die Manövrierfähigkeit verbessert werden. Bei dem Hilfsmedium kann es sich beispielsweise um Druckluft oder Wasser handeln, welche zum Verteilen, insbesondere Versprühen, des Applikationsmedium eingesetzt werden kann.

In einer bevorzugten Ausführungsform ist an der Hilfsdrohne zumindest ein Sensor und/oder ein Mittel zur Überwachung einer Umgebung der Hilfsdrohne, insbesondere der Arbeitsdrohne, angeordnet. Auch an der Hilfsdrohne können Überwachungsmittel angeordnet sein, so dass es nicht zwingend einer weiteren, dritten Drohne zur Überwachung der Durchführung der Arbeiten und Arbeitseinsätze der Arbeitsdrohne bedarf. Auch das Erkennen von Hindernissen wird erleichtert, da die Hilfsdrohne gegenüber der Arbeitsdrohne auf Grund des Abstandes zum Objekt einen deutlichen größeren Bereich überwachen kann.

In einer weiteren vorteilhaften Ausgestaltungsform der Erfindung sind die Mittel zur Überwachung zur Überwachung einer Arbeitstrajektorie der Arbeitsdrohne und/oder Hilfsdrohne und/oder der weiteren Drohne ausgebildet. Es können insbesondere die Bewegungen und Arbeitsabläufe erfasst und überprüft werden. Die Arbeitstrajektorie kann vorab eingestellt worden sein, beispielsweise wenn der Vorgang vorab simuliert oder erprobt worden ist. Zudem ist es für bestimmte Applikationen erforderlich, dass mittels der Arbeitsdrohne bei der Applikation ein spezielles Muster abgeflogen wird, um eine saubere Applikation des Applikationsmediums sicherzustellen.

In vorteilhafter Weise umfasst der Drohnenverbund zumindest zwei Arbeitsdrohnen, wobei jeder Arbeitsdrohne eine Hilfsdrohne zugeordnet ist und/oder wobei zumindest zwei Arbeitsdrohnen einer Hilfsdrohne zugeordnet sind. Die Arbeitsdrohnen können insbesondere zur Ausführung unterschiedlicher Arbeiten ausgebildet sein, in dem diese beispielsweise für zwei unterschiedliche Arbeitsschritte ausgerüstet sind.

Bei der Zuordnung von einer Arbeitsdrohne zu einer Hilfsdrohne können die einzelnen Arbeitsdrohnen freier agieren und sind beispielsweise in ihrem Bewegungsradius nicht eingeschränkt durch die weitere Arbeitsdrohne.

Bei der Zuordnung von zwei oder mehr Arbeitsdrohnen zu einer Hilfsdrohne kann die Hilfsdrohne derart ausgebildet sein, dass diese separate, insbesondere identische oder unterschiedliche Versorgungsleitungen für die einzelnen Arbeitsdrohnen aufnimmt oder dass, bei einer Versorgung von Arbeitsdrohnen mit dem gleichen Medium, die Versorgungsleitung an der Hilfsdrohne einen Abzweig aufweist, welcher dann jeweils zu der Arbeitsdrohne führt. Dies ist besonders vorteilhaft, wenn Arbeitsdrohnen das gleiche Medium benötigen oder wenn es sich bei der Versorgungsleitung beispielsweise um eine Stromleitung handelt.

Vorzugsweise kann der Drohnenverbund mehr als eine weitere Drohne umfassen. So können die weiteren Drohnen jeweils für spezielle Zwecke und/oder mit speziellen Sensoren ausgestattet werden und insbesondere nur bedarfsweise eingesetzt werden.

Gemäß einer weiteren bevorzugten Ausführungsform umfasst der Drohnenverbund mehrere Versorgungsleitungen, wobei alle Versorgungsleitungen über die Hilfsdrohne geführt sind.

Alternativ können zumindest zwei Versorgungsleitungen über die Hilfsdrohne geführt sein. Bevorzugt handelt es sich bei den zumindest zwei Versorgungsleitungen um unterschiedliche Versorgungsleitungen, insbesondere eine Stromleitung und eine Transportleitung.

Weiter alternativ kann auch jeder Versorgungsleitung eine Hilfsdrohne zugeordnet sein. Die entsprechende Konstellation hängt von der Länge der Versorgungsleitung und der Anzahl an Versorgungsleitungen ab. Insbesondere können unterschiedliche Versorgungsleitungen über separate Hilfsdrohnen geführt werden, so dass im Falle eines nicht mehr benötigten Mediums die Versorgungsleitung für dieses Medium von der Arbeitsdrohne abgetrennt und die entsprechende Hilfsdrohne abgezogen werden kann.

Bevorzugt ist an der Hilfsdrohne eine Führung für die Versorgungsleitung angeordnet, wobei die Führung über eine Einrichtung zur Einstellung einer Länge der Versorgungsleitung zwischen der Arbeitsdrohne und der Hilfsdrohne umfasst. Über die Führung wird eine sichere und insbesondere knickfreie Aufnahme der Versorgungsleitung sichergestellt. Zudem erlaubt die Führung eine aktive Einstellung der Länge der Versorgungsleitung zwischen der Arbeitsdrohne und der Hilfsdrohne, so dass diese nicht unter Spannung steht und ggf. reißen kann.

In einer vorteilhaften Weiterbildung des Drohnenverbundes ist ein Abstand zwischen der Arbeitsdrohne und der Hilfsdrohne fest oder variabel einstellbar. Insbesondere ist die Länge der Versorgungsleitung zwischen der Arbeitsdrohne und der Hilfsdrohne einstellbar. Es kann bei Bedarf der Abstand zwischen der Arbeitsdrohne und der Hilfsdrohne eingestellt und an die Umgebungsbedingungen angepasst werden. Insbesondere kann die Arbeitsdrohne weiter von der Hilfsdrohne entfernt werden, um beispielsweise eine Beeinflussung der Rotoren oder von Verwirbelungen bei der Applikation eines Applikationsmediums mit dem Applikator der Arbeitsdrohne zu vermeiden. Es ist hierbei jedoch vorteilhaft, den Abstand zwischen der Arbeitsdrohne und der Hilfsdrohne und auch die Länge der Versorgungsleitung so gering wie möglich zu halten, um die Zugbelastung an der Arbeitsdrohne durch die Versorgungsleitung zwischen der Arbeitsdrohne und der Hilfsdrohne zu minimieren.

Vorzugsweise liegt der Abstand zwischen der Arbeitsdrohne und der Hilfsdrohne im Wesentlichen in einem Bereich einer dreifachen Rotoren-Distanz der Arbeitsdrohne oder der Hilfsdrohne. Die Rotoren-Distanz ist durch eine Distanz der Schwerpunkte von zwei Rotoren der Arbeitsdrohne oder der Hilfsdrohne bestimmt. Insbesondere kann die Rotoren-Distanz die Distanz der Schwerpunkte von zwei benachbarter Rotoren oder von zwei diametral gegenüberliegenden Rotoren sein.

Bevorzugt ist ein Mindestabstand zwischen der Arbeitsdrohne und der Hilfsdrohne eingestellt bzw. vorgegeben. So kann insbesondere eine Beeinflussung der beiden Drohnen, insbesondere durch deren Rotoren vermieden werden. Bevorzugt beträgt der Mindestabstand zumindest die Rotoren-Distanz, besonders bevorzugt die 1,5-fache Rotoren-Distanz. Vorzugsweise ist der Abstand zwischen der Arbeitsdrohne und der Hilfsdrohne so gewählt, dass die Länge der Versorgungsleitung zwischen der Arbeitsdrohne und der Hilfsdrohne im Wesentlichen dem Abstand entspricht. Besonders vorteilhaft ist, dass die Länge der Versorgungsleitung zwischen der Arbeitsdrohne und der Hilfsdrohne nicht mehr als 1m von dem Abstand abweicht.

In einer bevorzugten Ausführungsform kann auch ein Abstand zwischen der weiteren Drohne und der Arbeitsdrohne und/oder der Hilfsdrohne fest oder variabel einstellbar. Insbesondere kann auch ein Mindestabstand zwischen der weiteren Drohne und der Arbeitsdrohne und/oder der Hilfsdrohne eingestellt bzw. vorgegeben werden. Die Wahl der Abstände und die dazugehörigen Bedingungen sind hierbei gleich zu denjenigen für den Abstand bzw. den Mindestabstand zwischen der Arbeitsdrohne und der Hilfsdrohne.

Vorzugsweise sind die Arbeitsdrohne und die Hilfsdrohne und die weitere Drohne während eines Betriebs so angeordnet, dass diese im Wesentlichen frei von einer gegenseitigen Beeinflussung ihrer Rotoren sind. Insbesondere können die Arbeitsdrohne und die Hilfsdrohne und/oder die weitere Drohne im Wesentlichen auf gleicher Höhe angeordnet sein.

Eine vorteilhafte Ausführungsform zeichnet aus, dass die Arbeitsdrohne und die Hilfsdrohne und/oder die weitere Drohne über eine Steuereinrichtung miteinander verbunden sind, und insbesondere über eine Einrichtung zur drahtlosen Kommunikation miteinander verfügen. Bevorzugt sind eine Bewegung der Arbeitsdrohne und der Hilfsdrohne und der weiteren Drohne im Betrieb miteinander gekoppelt. Die Arbeitsdrohne und Hilfsdrohne und die weitere Drohne können somit miteinander koordiniert werden, da Bewegungen der Arbeitsdrohne durch die Verbindung über die Versorgungsleitung zu einer Beeinflussung der Lage oder Bewegung der Hilfsdrohne haben kann und umgekehrt. Auch ist es erforderlich, dass die Arbeitsdrohne und die Hilfsdrohne so gesteuert werden mittels der Steuereinrichtung, dass kein Zug auf die Versorgungsleitung zwischen der Arbeitsdrohne und der Hilfsdrohne kommt, um ein Reißen der Versorgungsleitung zu verhindern. Auch die weitere Drohne sollte so koordiniert werden, dass diese eine entsprechende Überwachung der Arbeitsdrohne und/oder Hilfsdrohne ausführen kann.

Alternativ oder vorzugsweise ergänzend sind die Arbeitsdrohne und die Hilfsdrohne und/oder die weitere Drohne einzeln steuerbar. Es ist besonders vorteilhaft, dass die Arbeitsdrohne und die Hilfsdrohne und die Hilfsdrohne autonom steuerbar sind. Die Hilfsdrohne und insbesondere die Arbeitsdrohne und die weitere Drohne können somit gezielt bewegt werden, um beispielsweise ein Applikationsmedium an einem Objekt an einer bestimmten Stelle auszutragen. Hierbei kann es erforderlich sein, dass die Arbeitsdrohne in ihrer Bewegung frei gegenüber der Hilfsdrohne ist, um eine korrekte Position zur Applikation oder zur Überprüfung des Objektes einzunehmen.

Insbesondere ist die Steuereinrichtung dazu ausgebildet, die Arbeitsdrohne und die Hilfsdrohne mittels Daten der weiteren, dritten Drohne auf dem festen Abstand zueinander zu halten.

Eine weitere Lösung der Aufgabe wird angegeben durch ein System umfassend einen Drohnenverbund wie vorstehend dargelegt und eine Basisstation, wobei die Versorgungsleitung mit der Basisstation verbunden ist. Das System umfasst neben dem Drohnenverbund auch eine Basisstation, welche mit der Versorgungsleitung in Wirkverbindung steht und für eine Versorgung der Versorgungsleitung sorgt. Die Basisstation bildet somit einen Ausgangspunkt für die Versorgung der Versorgungsleitung mit einem Medium und/oder Strom und/oder Daten.

Vorzugsweise kann die Basisstation Vorratsbehältnisse für das Medium, insbesondere das Applikationsmedium, Pumpensysteme zum Pumpen des Mediums in der Versorgungsleitung zur Arbeitsdrohne, Mischeinrichtungen für das Medium und ähnliches umfassen. Alternativ oder vorzugsweise ergänzend umfasst die Basisstation auch einen Generator zur Erzeugung von Strom oder ist an das Stromnetz anschließbar ausgebildet.

Die Basisstation kann insbesondere als eine mobile Einheit ausgebildet sein, welche mit an den jeweiligen Einsatzort gebracht werden kann. Alternativ kann die Basisstation auch ortsfest an einem Objekt, insbesondere an einem Gebäude angeordnet sein.

Eine vorteilhafte Ausgestaltungsform zeichnet aus, dass die Basisstation eine Abrolleinrichtung für die zumindest eine Versorgungsleitung umfasst, über welche die Versorgungsleitung geführt ist. Über die Abrolleinrichtung wird ein sicheres Abrollen und Einrollen der Versorgungsleitung sichergestellt, so dass diese insbesondere frei von Knicken oder sonstigen Beeinträchtigungen auf der Abrollvorrichtung vorliegt, da diese sonst die Versorgung über die Versorgungsleitung stören oder gar unterbinden könnten. Zudem lassen sich die Versorgungleitungen, welche eine Länge von über 100m aufweisen können, einfacher gehandhabt und transportiert werden.

Bevorzugt ist jeder Versorgungsleitung eine Abrolleinrichtung zugeordnet oder mehrere Versorgungsleitungen sind über die Abrolleinrichtung geführt. Durch eine separate Zuordnung einzelner Leitungen für jede Abrolleinrichtung können diese den jeweiligen Anforderungen nach abgerollt werden, insbesondere wenn es sich nicht um identische Versorgungsleitungen handelt.

Bevorzugt ist die Abrolleinrichtung dazu eingerichtet eine Länge der Versorgungseinleitung in Abhängigkeit der Lage der Hilfsdrohne und ggf. der Arbeitsdrohne freizugeben oder einzurollen. Die Abrolleinrichtung kann passiv ausgebildet sein, wodurch die Hilfsdrohne durch ihre Bewegung eine Länge an Versorgungsleitung mitzieht. Diese passive Ausbildung der Abrolleinrichtung ist jedoch im Wesentlichen bei der Freigabe einer Länge an Versorgungsleitung möglich. In vorteilhafter Weise handelt es sich bei der Abrolleinrichtung um eine aktive Abrolleinrichtung, welche gesteuert eine Länge an Versorgungsleitung freigibt oder einrollen kann. Somit kann sichergestellt werden, dass die Versorgungsleitung wieder auf der Abrolleinrichtung eingerollt wird. Zudem wird die Hilfsdrohne entlastet, da diese mit geringerer Kraft an der Versorgungsleitung ziehen kann beim Aufstieg.

In einer bevorzugten Ausführungsform umfasst das System weiter eine Steuereinrichtung zur Steuerung der Arbeitsdrohne, der Hilfsdrohne, der weiteren Drohne und/oder der Basisstation, insbesondere der Abrolleinrichtung. Über die Steuereinrichtung kann das gesamte System aus Drohnenverbund mit Arbeitsdrohne, Hilfsdrohne und ggf. weiterer Drohnen sowie Basisstation einheitlich gesteuert werden, um entsprechende Einsätze an einem Objekt schnell und effizient abzuschließen. Insbesondere können auch Daten zu einer Flugtrajektorie der Arbeitsdrohne und/oder Hilfsdrohne und/oder der weiteren Drohne in der Steuereinrichtung hinterlegt sein, welche beispielsweise zuvor in einer Simulation oder basierend auf Erfahrungsdaten ermittelt wurde.

Bevorzugt ist zumindest eine Basisstation stationär angeordnet. Insbesondere kann die Basisstation an einem Objekt, vorzugsweise an einem Gebäude, angeordnet sein, bevorzugt in einer Höhe über dem Boden. Eine stationäre Anordnung der Basisstation ist besonders bei wiederkehrenden, gleichartigen Einsätzen eines Drohnenverbundes an einem Objekt vorteilhaft, da dann lediglich nur noch die Arbeitsdrohnen und die Hilfsdrohne für einen entsprechenden Einsatz bereitgestellt werden müssen. Auch bei sehr hohen Objekten bzw. Gebäuden kann eine Basisstation in einer bestimmten Höhe vorteilhaft sein, da über diese Basisstation das gesamte Objekt bzw. Gebäude mit dem Drohnenverbund bearbeitet werden kann.

In vorteilhafter Weise umfasst das System mehrere Basisstationen. Vorzugsweise sind die Basisstationen in einem Basisabstand an dem Objekt, insbesondere an dem Gebäude, angeordnet. Alternativ oder vorzugsweise ergänzend ist eine Basisstation je Objektseite des Objektes, insbesondere je Gebäudeseite des Gebäudes angeordnet. Damit können entsprechend große Objekte mittels des Drohnenverbundes bearbeitet werden.

Vorzugsweise kann die Basisstation nur eine Grundversorgung mit Versorgungsleitungen bereitstellen, beispielsweise mit Versorgungsleitungen für Strom und Daten. Ergänzend können dann abhängig von dem jeweiligen Arbeitsauftrag und Anwendungszweck weitere, insbesondere mobile Basisstationen angeordnet werden, welche die Versorgung der Versorgungsleitungen mit einem entsprechenden Medium, beispielsweise dem Applikationsmedium sicherstellen.

Vorzugsweise ist die Bewegung der Arbeitsdrohne und der Hilfsdrohne so gesteuert, dass diese einem vorgegebenen, insbesondere optimiertem Flugplan folgt. Die Flugbahn oder Flugtrajektorie kann zuvor simuliert worden sein oder auf Erfahrungsdaten beruhen und entsprechend in der Steuereinrichtung hinterlegt sein. Eine entsprechende Flugbahn stellt insbesondere bei einer Applikation eines Applikationsmedium sicher, dass das Applikationsmedium den örtlichen Anforderungen genügend aufgetragen und ausgebracht wird. Hierdurch können die gewünschten Arbeitsergebnisse und Anforderungen zuverlässig erfüllt werden.

Vorteile der Erfindung sind nachfolgend anhand von Ausführungsbeispielen und den Figuren erläutert.

Es zeigen
- Figur 1: einen Drohnenverbund aus Arbeitsdrohne und Hilfsdrohne; und
- Figur 2: einen erfindungsgemäßen Drohnenverbund aus zumindest drei Drohnen.

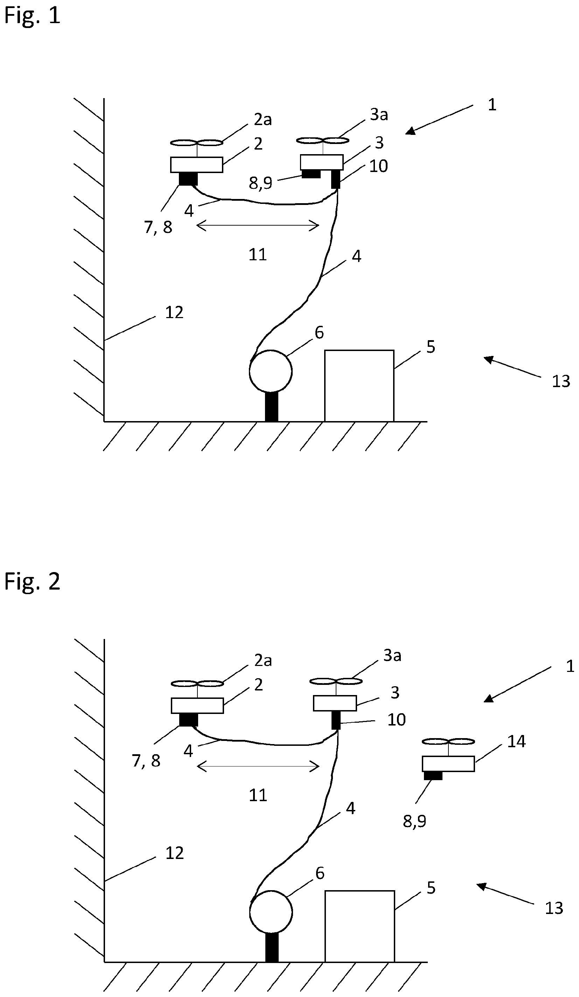

In Figur 1 ist ein Ausführungsbeispiel für einen Drohnenverbund 1 aus einer Arbeitsdrohne 2 und einer Hilfsdrohne 3 in einem System 13 dargestellt.

Der Drohnenverbund 1 umfasst eine Arbeitsdrohne 2 sowie eine Hilfsdrohne 3, welche beide im Wesentlichen in gleicher Höhe über dem Boden sich befinden. Von der Arbeitsdrohne 2 verläuft eine Versorgungsleitung 4 über die Hilfsdrohne 3 zu einer Basisstation 5, welche sich am Boden befindet.

Die Versorgungsleitung 4 ist vorliegend zur Versorgung eines Applikators 7, welcher an der Arbeitsdrohne 2 unterhalb der durch die Rotoren 2a gebildeten Rotorebene angeordnet ist, mit einem Applikationsmedium ausgebildet. Durch die unmittelbare Versorgung des Applikators 7 mit dem Applikationsmedium kann ein längerer Betrieb der Arbeitsdrohne 2 gewährleistet werden. Oft ist bei den vorliegenden Anwendungen die Transportlast, zu welcher das Applikationsmedium im Wesentlichen beiträgt, ein limitierender Faktor. Zudem wird im Betrieb das Applikationsmedium an der Arbeitsdrohne 2 verbraucht, wodurch sich dessen Schwerpunkt ändert, wenn das Applikationsmedium unmittelbar an der Arbeitsdrohne 2, beispielsweise über eine Kartusche oder einen Tank, angeordnet ist. Diese beiden Nachteile werden durch eine Versorgung über die Versorgungsleitung 4 vermieden.

Neben der Versorgung mit einem Applikationsmedium kann über die Versorgungsleitung 4 oder eine weitere Versorgungsleitung 4 die Arbeitsdrohne 2 auch mit elektrischer Energie versorgt werden, wodurch die Einsatzdauer der Arbeitsdrohne 2 weiter erhöht wird.

Die Arbeitsdrohne 2 befindet in der Nähe eines Objektes 12, welches vorliegend durch eine Wand eines Gebäudes gebildet ist. Bei dem Objekt 12 kann es sich jedoch auch um ein anderes bauliches Objekt, beispielsweise eine Brücke, oder eine technische Anlage handeln. Die Arbeitsdrohne 2 umfasst neben dem Applikator 7 weiter einen Sensor 8, welcher ebenfalls an der Arbeitsdrohne 2 unterhalb der Rotorebene angeordnet ist. Mit dem Sensor 8 soll insbesondere das Objekt 12 erfasst werden und der Applikationsvorgang verfolgt werden. Beispielsweise handelt es sich bei dem Sensor um eine Kamera.

Die Hilfsdrohne 3 befindet sich in einem lateralen Abstand 11 zur Arbeitsdrohne 2, um eine Kollision sowie eine gegenseitige Einflussnahme, insbesondere durch Verwirbelungen der Rotoren 2a, 3a der Arbeitsdrohne 2 und Hilfsdrohne 3 zu vermeiden. Die Versorgungsleitung 4 zwischen der Arbeitsdrohne 2 und der Hilfsdrohne 3 ist etwas länger als der Abstand 11 ausgebildet, so dass diese insbesondere leicht durchhängt. Hierdurch wird eine unmittelbare Belastung der Arbeitsdrohne mit einer Zugbelastung vermieden. Zudem kann sich die Arbeitsdrohne 2 dann freier bewegen und hat einen größeren Bewegungsspielraum, da die Hilfsdrohne 3 nicht bei jeder Bewegung der Arbeitsdrohne 2 unmittelbar nachgeführt werden muss.

An der Hilfsdrohne 3 ist weiter eine Führung 10 angeordnet, über welche die Versorgungsleitung 4 zur Basisstation 5 geführt ist und über welche im Wesentlichen eine Zugentlastung der Arbeitsdrohne 2 durch die Versorgungsleitung 4 sichergestellt wird. Bei der Führung 10 kann es sich um eine passive Führung handeln, in welcher die Versorgungsleitung 4 nur aufgenommen und ggf. fixiert ist. Damit liegt die Last und Zugbelastung durch die Versorgungsleitung direkt an der Hilfsdrohne 3 an. Alternativ kann es sich auch um eine aktive Führung 10 handeln, welche motorisiert ausgebildet ist, um die Länge der Versorgungsleitung 4 gegenüber der Basisstation 5 als auch im Abstand 11 zwischen Arbeitsdrohne 2 und Hilfsdrohne 3 entsprechend einzustellen. Die Führung 10 ist vorliegend an der Hilfsdrohne 3 fest angeordnet, kann alternativ aber auch an der Hilfsdrohne 3 bewegbar angeordnet sein.

Die Hilfsdrohne 3 umfasst vorliegend weiter zumindest einen Sensor 8 sowie Mittel 9 zur Überwachung. Bei dem Mittel 9 zur Überwachung handelt es sich vorliegend um eine Kamera, welche die Aktivitäten der Arbeitsdrohne 2 erfasst.

Die zumindest eine Versorgungsleitung 4 führt von der Arbeitsdrohne 2 über die Hilfsdrohne 3 zur Basisstation 5. An der Basisstation 5 sind beispielsweise Tanks angeordnet, in welchen das Applikationsmedium lagert und dann über die Versorgungsleitung 4 zum Applikator 7 an der Arbeitsdrohne 2 in Abhängigkeit des Verbrauches gepumpt bzw. gefördert wird. Auch kann an der Basisstation die Energieversorgung der Arbeitsdrohne 2 und der Hilfsdrohne 3 über eine Stromleitung als Versorgungsleitung 4 sichergestellt werden.

Die Basisstation 5 kann stationär ausgebildet sein und insbesondere Teil eines Objektes, insbesondere eines Gebäudes sein, beispielsweise für Reinigungszwecke an der Fassade des Gebäudes. Somit können regelmäßig Reinigungen an dem Gebäude durchgeführt werden. Alternativ kann die Basisstation 5 auch mobil ausgestaltet sein und somit an den jeweiligen Einsatzort gebracht werden. Hierdurch kann die Arbeitsdrohne 2 flexibel eingesetzt werden, da die Basisstation 5 an den jeweiligen Einsatzort gebracht werden kann.

Um einen entsprechenden Höhenaufstieg der Arbeitsdrohne 2 und Hilfsdrohne 3 zu gewährleisten, weist die Versorgungsleitung 4 eine bestimmte, maximale Länge auf. Zur besseren Koordination ist die Versorgungsleitung 4 auf einer Abrollstation 6 aufgewickelt und kann entsprechend dem Aufstieg bzw. Abstieg der Arbeitsdrohne 2 und Hilfsdrohne 3 abgewickelt bzw. aufgewickelt werden. Somit wird eine sichere Führung der Versorgungsleitung 4 gewährleistet. Die Abrolleinrichtung 6 kann insbesondere einen Motor aufweisen, mittels welcher eine Länge der Versorgungsleitung 4 freigegeben wird, ohne dass die Hilfsdrohne 3 aktiv ziehen muss. Hierdurch wird die Zugbelastung an der Hilfsdrohne 3 weiter reduziert.

In Figur 2 ist eine erfindungsgemäße Ausführungsform eines Drohnenverbundes 1 dargestellt, welche insgesamt drei Drohnen umfasst. Analog zu Figur 1 umfasst der Drohnenverbund 1 gemäß Figur 2 ebenfalls eine Arbeitsdrohne 2 und eine Hilfsdrohne 3, welche über die eine Versorgungsleitung 4 mit einer Basisstation 5 verbunden sind. Die Versorgungsleitung 4 ist wiederum für eine bessere Manövrierfähigkeit der Arbeitsdrohne 2 und zur Zugentlastung an der Arbeitsdrohne 2 über die Hilfsdrohne 3 geführt. Im Weiteren umfasst der Drohnenverbund gemäß Figur 3 eine weitere, dritte Drohne 14, welche zur Überwachung der Arbeitsdrohne 2 und der Hilfsdrohne 3 dient. Die weitere, dritte Drohne 14 ist nicht mit der Versorgungsleitung 4 verknüpft und somit unabhängig von der Arbeitsdrohne 2 und der Hilfsdrohne 3 im Drohnenverbund 1 bewegbar und steuerbar.

Die weitere Drohne 14 umfasst vorliegend Sensoren 8 sowie Mittel 9 zur Überwachung der Arbeitsdrohne 2 und der Hilfsdrohne 3. Insbesondere kann die weitere Drohne 14 auch genaue Aufnahmen der Arbeitsweise und Arbeitsergebnisse der Arbeitsdrohne 2 an dem Objekt 12 machen, so dass gleichzeitig eine umfassende Dokumentation der Arbeitsvorgänge erfolgen kann. Im Gegensatz zu Figur 1 sind bei der Verwendung einer weiteren Drohne 14 an der Hilfsdrohne 3 keine Mittel zur Überwachung 9 angeordnet, sondern nur noch Sensoren 8, welche beispielsweise ein Unterschreiten eines Mindestabstandes des Abstandes 11 der Arbeitsdrohne 2 und Hilfsdrohne 3 detektiert.

Das gesamte System 13 aus Drohnenverbund 1 mit Arbeitsdrohne 2, Hilfsdrohne 3 und weiterer Drohne 14 sowie der Basisstation 5 mit Abrolleinrichtung 6 ist über eine gemeinsame Steuereinrichtung wirkverbunden. Die Arbeitsdrohne 2 und Hilfsdrohne 3 werden auf entsprechenden Flugbahnen bzw. Flugtrajektorien geführt, welche in der Steuereinrichtung hinterlegt sind und beispielsweise auf Erfahrungswerten oder Simulationen beruhen. Alternativ können die Arbeitsdrohne 2 und Hilfsdrohne 3 auch manuell durch einen Bediener gesteuert werden, wobei die Arbeitsdrohen 2 und die Hilfsdrohne 3 miteinander gekoppelt sind. Weiter alternativ können die Arbeitsdrohne 2 und Hilfsdrohne 3 jedoch auch separat gesteuert werden, beispielsweise durch zwei Bediener. Die weitere Drohne 14 kann von einer gemeinsamen Bewegung von Arbeitsdrohne 2 und Hilfsdrohne 3 autonom sein, wodurch diese flexibel eine entsprechende Überwachung durchführen oder Aufnahmen der durchgeführten Arbeiten machen kann. In der Steuereinrichtung werden auch die Signale und Informationen der Sensoren 8 sowie der Mittel 9 zur Überwachung zusammengeführt, um beispielsweise ein Warnsignal bei Unterschreiten eines Mindestabstandes des Abstandes 11 der Arbeitsdrohne 2 und Hilfsdrohne 3 auszugeben oder Ausweichmanöver einzuleiten.

### Bezugszeichenliste

- 1: Drohnenverbund
- 2: Arbeitsdrohne
- 2a: Rotor
- 3: Hilfsdrohne
- 3a: Rotor
- 4: Versorgungsleitung
- 5: Basisstation
- 6: Abrolleinrichtung
- 7: Applikator
- 8: Sensor
- 9: Mittel zur Überwachung
- 10: Führung
- 11: Abstand
- 12: Objekt
- 13: System
- 14: Drohne

## Patentansprüche

1. Drohnenverbund (1) aus zumindest drei Drohnen,
mit zumindest einer ersten Arbeitsdrohne (2), wobei die Arbeitsdrohne (2) zur Ausübung von Tätigkeiten in ihrer Umgebung ausgebildet ist und über eine Versorgungsleitung (4) mit einer Basisstation (5) verbunden ist, und
mit zumindest einer Hilfsdrohne (3), wobei die Versorgungsleitung (4) über die Hilfsdrohne (3) zu der Arbeitsdrohne (2) geführt ist, und
mit einer weiteren, dritten Drohne (14), welche Sensoren (8) und/oder Mittel (9) zur Überwachung der Arbeitsdrohne (2) und/oder Hilfsdrohne (3) und/oder Mittel (9) zur Überwachung der Umgebung der Arbeitsdrohne (2) und/oder Hilfsdrohne (3) umfasst.

2. Drohnenverbund (1) nach Anspruch 1, **dadurch gekennzeichnet, dass** die Arbeitsdrohne (2) im Wesentlichen frei von einer Zugbelastung durch die Versorgungsleitung (4) bzw. durch eine Gewichtskraft der Versorgungsleitung (4) ist, und/oder **dass** die Versorgungseinleitung (4) eine Stromleitung und/oder eine Datenleitung und/oder Transportleitung für ein Medium ist, insbesondere dass es sich bei dem Medium um ein festes, flüssiges, pastöses und/oder gasförmiges Medium handelt, vorzugsweise ist das Medium Wasser, ein Reinigungsmittel, ein Reinigungsmedien oder Druckluft.

3. Drohnenverbund (1) nach einem der vorhergehenden Ansprüche, **dadurch gekennzeichnet, dass** die Arbeitsdrohne (2) zumindest einen Applikator (7) zur Applikation eines Applikationsmediums auf ein Objekt (12), insbesondere ein Gebäude, umfasst, und/oder dass die Arbeitsdrohne (2) zumindest einen Sensor (8) zur Detektion zumindest einer Eigenschaft eines Objekts (12) und/oder der Umgebung der Arbeitsdrohne (2) umfasst.

4. Drohnenverbund (1) nach Anspruch 3, **dadurch gekennzeichnet, dass** die Versorgungsleitung (4) eine Transportleitung für das Applikationsmedium oder ein Hilfsmedium ist und dass die Transportleitung mit dem Applikator (7) verbunden ist.

5. Drohnenverbund (1) nach einem der vorhergehenden Ansprüche, **dadurch gekennzeichnet, dass** an der Hilfsdrohne (3) zumindest ein Sensor (8) und/oder ein Mittel (9) zur Überwachung einer Umgebung der Hilfsdrohne (3), insbesondere der Arbeitsdrohne (2), angeordnet ist und/oder
**dass** die Mittel (9) zur Überwachung zur Überwachung einer Arbeitstrajektorie der Arbeitsdrohne (2) und/oder Hilfsdrohne (3) und/oder weiteren Drohne (14) ausgebildet sind.

6. Drohnenverbund (1) nach einem der vorhergehenden Ansprüche, **dadurch gekennzeichnet, dass** der Drohnenverbund (1) zumindest zwei Arbeitsdrohnen (2) umfasst, wobei jeder Arbeitsdrohne (2) eine Hilfsdrohne (3) zugeordnet ist und/oder wobei zumindest zwei Arbeitsdrohnen (2) der zumindest einen Hilfsdrohne (3) zugeordnet sind.

7. Drohnenverbund (1) nach einem der vorhergehenden Ansprüche, **dadurch gekennzeichnet, dass** der Drohnenverbund (1) mehrere Versorgungsleitungen (4) umfasst, wobei alle Versorgungsleitungen (4) über die Hilfsdrohne (3) geführt sind oder wobei zumindest zwei Versorgungsleitungen (4) über die Hilfsdrohne (3) geführt sind oder wobei jeder Versorgungsleitung (4) eine Hilfsdrohne (3) zugeordnet ist, und/oder
**dass** an der Hilfsdrohne (3) eine Führung (10) für die Versorgungsleitung (4) angeordnet ist, wobei die Führung (10) über eine Einrichtung zur Einstellung einer Länge der Versorgungsleitung (4) zwischen der Arbeitsdrohne (2) und der Hilfsdrohne (3) umfasst.

8. Drohnenverbund (1) nach einem der vorhergehenden Ansprüche, **dadurch gekennzeichnet, dass** ein Abstand (11) zwischen der Arbeitsdrohne (2) und der Hilfsdrohne (3) fest ist oder variabel einstellbar ist, insbesondere dass die Länge der Versorgungsleitung (4) zwischen der Arbeitsdrohne (2) und der Hilfsdrohne (3) einstellbar ist.

9. Drohnenverbund (1) nach Anspruch 8, **dadurch gekennzeichnet, dass** ein Mindestabstand zwischen der Arbeitsdrohne (2) und der Hilfsdrohne (3) vorgegeben ist, bevorzugt dass der Abstand (11) zwischen der Arbeitsdrohne (2) und der Hilfsdrohne (3) so gewählt ist, dass die Länge der Versorgungsleitung (4) zwischen der Arbeitsdrohne (2) und der Hilfsdrohne (3) im Wesentlichen dem Abstand (11) entspricht, insbesondere dass die Länge der Versorgungsleitung (4) zwischen der Arbeitsdrohne (2) und der Hilfsdrohne (3) nicht mehr als 1 m von dem Abstand (11) abweicht.

10. Drohnenverbund (1) nach einem der vorhergehenden Ansprüche, **dadurch gekennzeichnet, dass** die Arbeitsdrohne (2) und/oder die Hilfsdrohne (3) und/oder die weitere Drohne (14) während eines Betriebs so angeordnet sind, dass diese im Wesentlichen frei von einer gegenseitigen Beeinflussung ihrer Rotoren (2a, 3a) sind, insbesondere dass die Arbeitsdrohne (2) und die Hilfsdrohne (3) im Wesentlichen auf gleicher Höhe angeordnet sind.

11. Drohnenverbund (1) nach einem der vorhergehenden Ansprüche, **dadurch gekennzeichnet, dass** die Arbeitsdrohne (2) und die Hilfsdrohne (3) und/oder die weitere Drohne (14) über eine Steuereinrichtung miteinander verbunden sind, und insbesondere über eine Einrichtung zur drahtlosen Kommunikation miteinander verfügen.

12. Drohnenverbund (1) nach Anspruch 11, **dadurch gekennzeichnet, dass** eine Bewegung der Arbeitsdrohne (2) und der Hilfsdrohne (3) und/oder der weiteren Drohne (14) im Betrieb miteinander gekoppelt sind und/oder dass die Arbeitsdrohne (2) und die Hilfsdrohne (3) und die weitere Drohne (14) einzeln steuerbar sind, insbesondere dass die Arbeitsdrohne (2) und die Hilfsdrohne (3) und die weitere Drohne (14) autonom steuerbar sind.

13. System (13) umfassend einen Drohnenverbund (1) nach einem der vorstehenden Ansprüche und eine Basisstation (5), wobei die zumindest eine Versorgungsleitung (4) mit der Basisstation (5) verbunden ist.

14. System (13) nach Anspruch 13, **dadurch gekennzeichnet, dass** die Basisstation (5) eine Abrolleinrichtung (6) für die zumindest eine Versorgungsleitung (4) umfasst, über welche die Versorgungsleitung (4) geführt ist, wobei bevorzugt jeder Versorgungsleitung (4) eine Abrolleinrichtung (6) zugeordnet ist oder wobei vorzugsweise mehrere Versorgungsleitungen (4) über die Abrolleinrichtung (6) geführt sind, insbesondere dass die Abrolleinrichtung (6) dazu eingerichtet ist eine Länge der Versorgungseinleitung (4) in Abhängigkeit der Lage der Hilfsdrohne (3) und ggf. der Arbeitsdrohne (2) freizugeben oder einzurollen.

15. System (13) nach einem der vorhergehenden Ansprüche 13 oder 14, weiter umfassend eine Steuereinrichtung zur Steuerung der Arbeitsdrohne (2), der Hilfsdrohne (3), der weiteren Drohne (14) und/oder der Basisstation (5), insbesondere der Abrolleinrichtung (6) und/oder **dass** die Bewegung der Arbeitsdrohne (2) und/oder der Hilfsdrohne (3) und/oder der weiteren Drohne (14) so gesteuert ist, dass diese einem vorgegebenen, insbesondere optimiertem Flugplan folgt.

16. System (13) nach einem der vorhergehenden Ansprüche 13 bis 15, **dadurch gekennzeichnet, dass** die zumindest eine Basisstation (5) stationär angeordnet ist, insbesondere dass die Basisstation (5) an einem Objekt (12), vorzugsweise einem Gebäude, angeordnet ist, bevorzugt in einer Höhe über dem Boden.

17. System (13) nach Anspruch 16, **dadurch gekennzeichnet, dass** das System (13) mehrere Basisstationen (5) umfasst, bevorzugt dass die Basisstationen (5) in einem Basisabstand an dem Objekt (12), insbesondere einem Gebäude, angeordnet sind und/oder dass eine Basisstation (5) je Objektseite des Objektes (12), insbesondere je Gebäudeseite des Gebäudes angeordnet ist.
